# DEMANDE DE BREVET EUROPEEN

(11) **EP 0 849 613 A1**
(43) Date de publication de la demande: **24.06.1998**
(21) Numéro de dépôt: 97402964.7
(22) Date de dépôt: 08.12.1997
(51) Int. Cl.: G02B 6/36

(54) **Dispositif de mise en nappe de fibres optiques**

(30) Priorité: 18.12.1996 FR 9615561
(71) Demandeur: SAT (Société Anonyme de Télécommunications), 75116 Paris (FR)
(72) Inventeur: Miquel, Françoise, 75013 Paris (FR); Vincens De Tapol, Olivier, 75013 Paris (FR); Grelin, Etienne, 75013 Paris (FR)
(74) Mandataire: Fruchard, Guy

(57) **Abrégé**

Le dispositif de mise en nappe de fibres optiques comporte un socle supportant un organe de maintien de module (2), un organe d'étalement de fibres (3), voisin de l'organe de maintien de module et ayant une surface d'appui présentant des parties en saillie, et un organe de positionnement et d'ordonnancement de fibres (4), voisin de l'organe d'étalement de fibres et comportant une fente (19) débouchant sur un côté de l'organe d'étalement.

## Description

La présente invention concerne un dispositif de mise en nappe de fibres optiques.

On sait que pour effectuer un raccordement de fibres optiques il est préférable, pour gagner du temps, d'effectuer un raccordement en masse, c'est-à-dire un raccordement simultané de plusieurs fibres optiques. Pour cela il est nécessaire de maintenir les fibres optiques côte à côte dans un même plan. Le maintien des fibres optiques selon un positionnement permettant un raccordement en masse est généralement réalisé au moyen d'une pince à fibres qui s'adapte sur les outillages de raccordement et permet d'effectuer successivement les opérations de dénudage, de coupe à une longueur prédéterminée généralement par fracture, et de raccordement des fibres optiques.

Lorsque les câbles ont une structure en nappe ou en ruban, la mise en place dans une pince est relativement aisée. Cette mise en place est sensiblement plus complexe lorsque les fibres optiques sont regroupées en faisceaux selon des modules par des organes de maintien tels que des tubes, des joncs rainurés, ou des gaines de faible épaisseur. Dans ce cas il est tout d'abord nécessaire de mettre les fibres optiques en nappe selon l'ordre dans lequel les fibres doivent être raccordées. Les dispositifs de mise en nappe existants comportent un socle portant un organe de maintien de module et un organe de positionnement formé par une simple plaque portée par le socle et comportant une fente horizontale débouchant sur un côté de la plaque. La fente de mise en nappe a une largeur très légèrement supérieure au diamètre des fibres afin de maintenir les fibres dans un même plan sans se croiser et dans l'ordre dans lequel elles sont engagées dans le dispositif de mise en nappe. Ces dispositifs ne permettent pas une identification et une préhension faciles des fibres provenant d'un module, et leur mise en oeuvre est donc longue et difficile.

Selon l'invention, on propose un dispositif de mise en nappe de fibres optiques à partir d'un module de fibres optiques, ce dispositif comportant un socle supportant : un organe de maintien de module, un organe d'étalement des fibres voisin de l'organe de maintien de module et ayant une surface d'appui présentant des parties en saillie, et un organe de positionnement et d'ordonnancement des fibres voisin de l'organe d'étalement des fibres et comportant une fente débouchant sur un côté.

Ainsi, pendant l'opération de mise en nappe, les parties en saillie de l'organe d'étalement évitent un déplacement des fibres lors de la préhension de l'une d'entre elles de sorte que l'identification des fibres est rendue plus aisée.

Selon une version avantageuse de l'invention, la surface d'appui de l'organe d'étalement est décalée latéralement par rapport à une direction longitudinale du module. Ainsi, les fibres sont légèrement courbées de façon élastique lorsqu'elles sont mises en place sur l'organe d'étalement et cette déformation élastique assure une application soutenue des fibres optiques sur la surface d'appui de l'organe d'étalement de sorte que l'on augmente encore le maintien en position des fibres optiques en attente d'identification et de préhension.

Selon un mode de réalisation préféré de l'invention, l'organe d'étalement comporte un ressort s'étendant dans un plan sensiblement perpendiculaire à une direction longitudinale du module, de préférence selon un arc de cercle. Ainsi, chaque fibre optique en attente est disposée dans une des spires du ressort de sorte que les fibres optiques sont positivement maintenues écartées les unes des autres tout en ne subissant que des contraintes très faibles n'endommageant pas les fibres.

Selon une autre caractéristique avantageuse de l'invention, la fente de l'organe de positionnement et d'ordonnancement forme un angle d'environ 45° par rapport à un plan horizontal. Ainsi les fibres optiques tombent naturellement par gravité au fond de la fente, ce qui facilite et accélère leur mise en place dans l'organe de positionnement et d'ordonnancement.

D'autres caractéristiques et avantages de l'invention apparaîtront à la lecture de la description qui va suivre d'un mode de réalisation particulier non limitatif de l'invention, en relation avec les figures ci-jointes parmi lesquelles:
- la figure 1 est une vue en perspective partiellement éclatée du dispositif de mise en oeuvre selon l'invention, avant mise en place d'un module à fibres optiques,
- la figure 2 est une vue en perspective partielle du dispositif de mise en nappe après mise en place d'un module à fibres optiques et étalement des fibres optiques,
- la figure 3 est une vue en perspective partielle analogue à celle de la figure 2, après mise en place de deux fibres optiques dans l'organe de positionnement et d'ordonnancement,
- la figure 4 est une vue en perspective partielle analogue à celle de la figure 2, après mise en place de l'ensemble des fibres optiques.

En référence aux figures, le dispositif de mise en nappe de fibres optiques selon l'invention comporte un socle généralement désigné en 1, supportant : un organe de maintien de module, généralement désigné en 2, un organe d'étalement des fibres, généralement désigné en 3, voisin de l'organe de maintien du module 2, un organe de positionnement et d'ordonnancement des fibres généralement désigné en 4, voisin de l'organe d'étalement des fibres 3, et un organe support de pince à fibres, généralement désigné en 5, disposé dans le prolongement de l'organe de positionnement et d'ordonnancement 4.

Dans le mode de réalisation préféré illustré, le socle 1 comporte une embase massive 6 sur laquelle est montée une platine 7 inclinée à 45° par rapport à un plan horizontal et sur laquelle sont fixés les différents organes composant le dispositif selon l'invention.

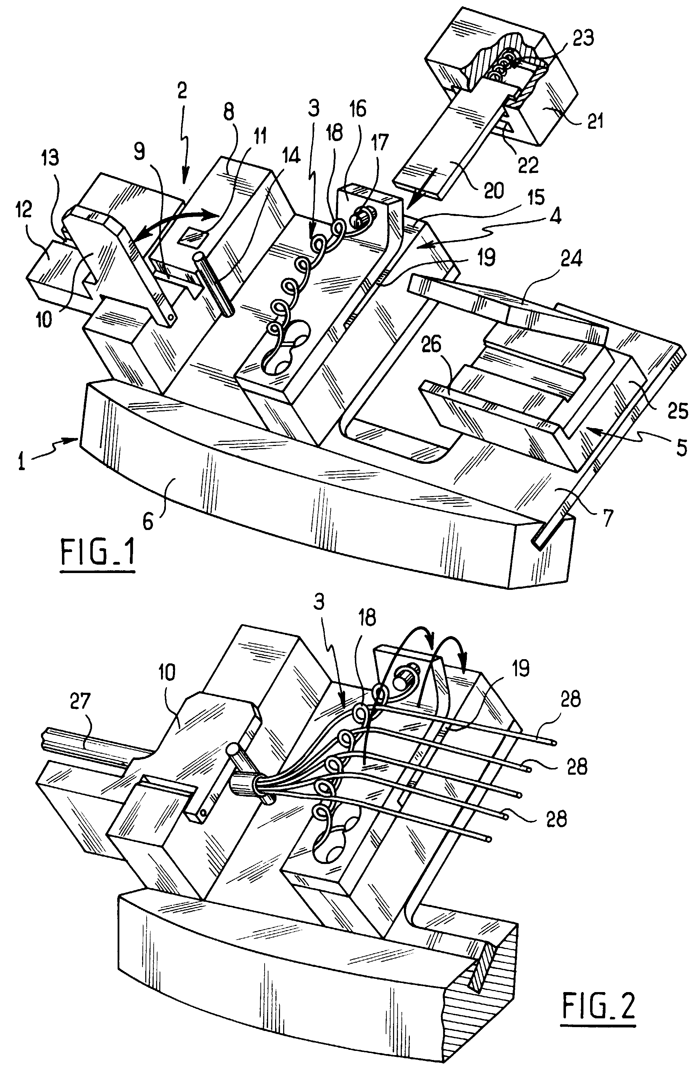

L'organe de maintien de module 2 comporte un bloc support parallélépipèdique 8 dont la face inférieure est fixée à la platine 7 et dont la face supérieure est traversée par une rainure 9 qui est de préférence équipée d'un élément en mousse ou en élastomère permettant de maintenir des modules de diamètres variés. Un clapet de fermeture 10 est monté de façon articulée sur le bloc support 8 en regard de la rainure 9 pour venir recouvrir celle-ci lorsque le clapet est rabattu comme indiqué par une flèche en trait épais sur la figure 1. Un aimant 11 est fixé dans la face supérieure du bloc support 8 pour maintenir le clapet 10 en position fermée. Une plaque de guidage 12 est fixée au clapet 10 sur le côté de celui-ci et s'étend en formant un angle avec celui-ci, de préférence un angle de 90°, de façon que la plaque de guidage 12 affleure la face supérieure du bloc support 8 lorsque le clapet 10 est ouvert. La plaque de guidage 12 comporte une rainure 13 qui est disposée pour venir dans le prolongement de la rainure 9 pour une position ouverte du clapet 10. Un pion de guidage 14 est fixé de façon adjacente à la rainure 9 du bloc support 8 sur un côté du bloc support opposé à la plaque de guidage 12. Le pion de guidage 14 s'étend en saillie par rapport à la face supérieure du bloc support 8.

L'organe d'étalement 3 et l'organe de positionnement et d'ordonnancement 4 sont réalisés sur un même bloc parallélépipédique 15 fixé à la platine 7 et sur lequel est fixée une plaque coudée 16. La plaque coudée 16 porte à l'une de ses extrémités un ergot de fixation 17 sur lequel est fixée une extrémité d'un ressort 18 dont l'autre extrémité est fixée à l'extrémité opposée de la plaque 16. Le ressort 18 s'étend sensiblement selon un arc de cercle dans un plan perpendiculaire à la direction longitudinale de la rainure 9 de l'organe de maintien 2. Comme illustré par les figures, le bloc 15 a une face supérieure qui s'étend à un niveau qui coïncide sensiblement avec un plan incliné à mi-hauteur de la rainure 9. Le ressort 18 qui est disposé au-dessus de la plaque coudée 16 est donc décalé latéralement par rapport à la direction longitudinale d'un module disposé dans la rainure 9.

L'organe de positionnement et d'ordonnancement 4 comporte une fente 19 formée par un épaulement dans la face de la plaque coudée 16 qui s'étend en regard du bloc 15. La fente 19 a une largeur très légèrement supérieure au diamètre des fibres optiques à mettre en nappe afin de permettre une introduction et un retrait aisés des fibres optiques tout en maintenant les fibres optiques les unes à côté des autres sans possibilité de se chevaucher. L'organe de positionnement et d'ordonnancement comporte en outre une lame de serrage 20 adapté à coulisser dans la fente 19 et portée par un bloc de manoeuvre 21. De préférence, le bloc de manoeuvre 21 comporte un aimant 22 encastré dans une face du bloc de manoeuvre 21 en regard d'un côté du bloc 15, et la lame de serrage 20 est montée pour coulisser dans le bloc de manoeuvre 21 et est rappelée par un ressort 23 qui tend à repousser la lame de serrage 20 vers l'extérieur du bloc de manoeuvre 21.

L'organe support de pince à fibres 5 est monté sur la platine 7 dans le prolongement de la fente 19 de l'organe de positionnement et d'ordonnancement 4, et comporte des moyens pour un montage amovible d'une pince à fibre 24. Dans le mode de réalisation illustré, l'organe support 5 comprend un simple bloc 25 fixé sur la platine 7 et ayant une surface supérieure inclinée à 45° et équipée d'un rebord 26 servant de butée pour un côté de la pince à fibres 24 qui est représentée en position ouverte sur la figure 1.

Lors d'une utilisation du dispositif selon l'invention, l'extrémité d'un module 27 est découpée pour dégager les fibres optiques 28 sur une longueur suffisante pour permettre une mise en nappe sans risquer de soumettre les fibres optiques à une contrainte exagérée. Afin d'écarter les fibres, on utilise un chiffon imbibé d'un solvant approprié, de manière à les charger électrostatiquement. Le module est mis en appui sur le côté de la partie du pion de guidage 14 qui s'étend en saillie par rapport au bloc support 8 et est abaissé le long de ce pion de guidage de sorte qu'il vient automatiquement s'insérer dans les rainures 9 et 13. Le clapet 10 est refermé soit en agissant directement sur celui-ci soit en agissant sur l'extrémité de la plaque de guidage 12 qui s'étend sur le côté du bloc support 8.

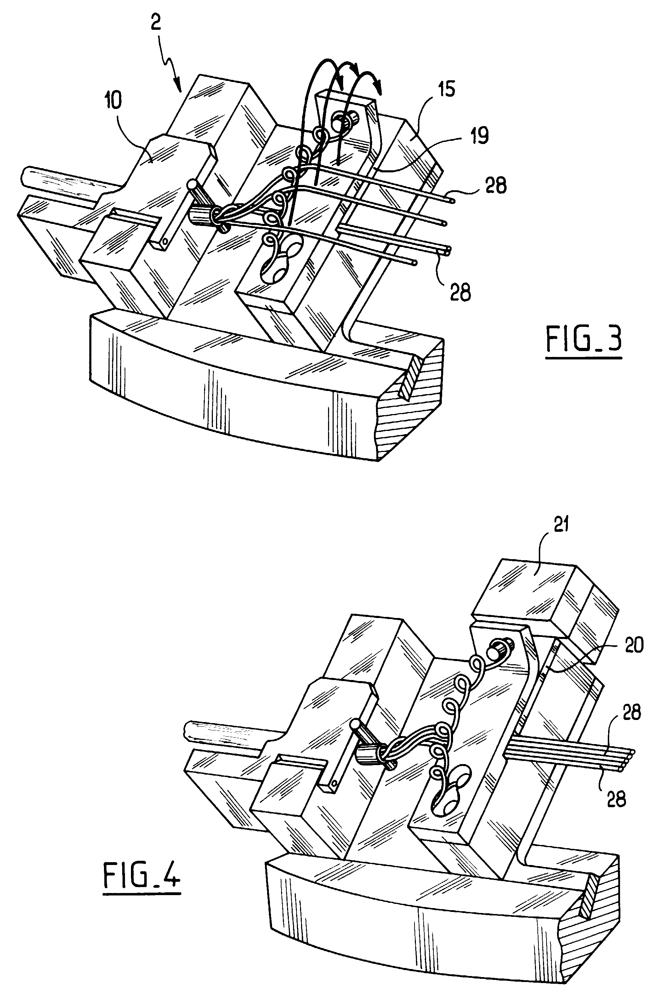

Le module 27 est ainsi maintenu dans sa position et l'utilisateur peut alors procéder à un étalement des fibres optiques 28 en répartissant celles-ci dans les spires du ressort 18, par exemple une fibre par spire comme illustré par la figure 2. On remarquera à ce propos que le fond des spires du ressort 18 est décalé latéralement par rapport au module 27. Dans ces conditions les fibres optiques 28 sont courbées de façon élastique dans un sens évitant qu'elles s'échappent des spires du ressort. Les fibres optiques 28 sont ensuite prises une par une dans l'ordre souhaité et introduites dans la fente 19 comme illustré par les flèches en trait épais sur les figures 2 et 3. On remarquera à ce propos que l'ordre de préhension des fibres 28 pour les introduire dans la fente 19 peut être différent de l'ordre des fibres optiques sur l'organe d'étalement 3. Les fibres optiques sont alors soumises à une légère courbure qui a été fortement exagérée sur les figures 3 et 4 sur lesquelles l'organe de maintien 2 et l'organe d'étalement 3 ont été représentés dans des positions beaucoup plus rapprochées que dans la réalité. La distance entre la sortie du module et l'organe de positionnement et d'ordonnancement est choisie pour que les fibres ne soient pas soumises à une contrainte risquant de les endommager. Sous l'effet de leur poids les fibres optiques 28 ont tendance à s'accoler les unes au autres dans la fente 19 comme illustré par la figure 3. On remarquera à ce propos que la disposition à 45° de la platine 7 supportant le bloc 15 permet tout à la fois de présenter les fibres optiques 28 sur l'organe d'étalement selon une orientation très satisfaisante pour un utilisateur tout en facilitant l'accès à la fente 19.

Lorsque toutes les fibres optiques ont été mises en place dans la fente de positionnement 19, la lame de serrage 20 est engagée dans la fente 19 et le bloc de manoeuvre 21 est poussé vers le bas jusqu'à ce que l'aimant 22 vienne s'appliquer contre le côté du bloc 15. Dans cette position l'extrémité de la lame de serrage 20 prend appui sur le côté de la nappe de fibres optiques 28 comme illustré sur la figure 4. La force d'appui de la lame de serrage contre les fibres est déterminée par la compression du ressort 23. La nappe de fibres optiques ainsi réalisée est alors introduite dans la pince 24 montée de façon amovible sur l'organe support de pince 5. On remarquera à ce propos que la mise en nappe est effectuée avant la mise en place de la pince à fibres de sorte qu'il est possible de coller les fibres entre elles par de la colle ou au moyen d'un ruban adhésif. Une fois la pince à fibres mise en place, le module équipé de la pince peut être sorti du dispositif de mise en place et on peut alors utiliser les outillages classiques de dénudage, de coupe et de raccordement habituellement utilisés pour des câbles à structure en nappe.

Bien entendu l'invention n'est pas limitée au mode de réalisation décrit et on peut y apporter des variantes de réalisation sans sortir du cadre de l'invention tel que défini par les revendications.

En particulier, on peut remplacer l'organe de maintien décrit par un organe de maintien comprenant des mâchoires dont l'une est fixe et l'autre est rappelée élastiquement vers la mâchoire fixe. En ce qui concerne l'organe d'étalement, on peut remplacer le ressort par tout autre organe comportant des parties en saillie, par exemple une vis disposée horizontalement ou de façon oblique, ou une plaque nervurée ou rainurée ou ayant une surface rugueuse ou un peigne. Le support de pince à fibres illustré peut être remplacé par un rail profilé sur lequel une pince à fibres comportant une rainure de forme complémentaire est montée pour coulisser. Ce dernier mode de réalisation permet d'adapter la position de la pince à la longueur des fibres et permet donc de minimiser la longueur de fibre à dénuder.

On peut également monter la pince à fibres 24 sur son support au moyen de pions en caoutchouc.

On peut également réaliser le dispositif selon l'invention sans organe support de pince à fibres, celle-ci étant mise en place juste avant le retrait du module.

Bien que le dispositif de mise en nappe selon l'invention ait été illustré avec un organe d'étalement et un organe de positionnement et d'ordonnancement portés par un même bloc, on peut réaliser le dispositif selon l'invention avec un organe d'étalement et organe de positionnement et d'ordonnancement séparés et disposés l'un à la suite de l'autre.

On peut en outre prévoir à côté de l'organe de positionnement et d'ordonnancement un modèle rappelant l'ordre dans lequel les fibres doivent être disposées. Ce modèle peut être sous forme d'un tableau comportant des lignes de couleurs correspondantes aux fibres optiques. Ce tableau est de préférence accolé à une loupe facilitant la vérification de la conformité des fibres avec les lignes du tableau. On peut également prévoir une vérification électronique de l'ordre des fibres par un dispositif de reconnaissance de couleur.

Bien que la lame de serrage 20 et le bloc de manoeuvre 21 ait été représentés sous forme d'une unité séparée on peut prévoir de les monter pour coulisser sur le bloc 15. Dans ce cas la lame de serrage 20 est de préférence fixée de façon rigide au bloc de manoeuvre 21 qui est monté sur le bloc 15 en étant rappelé de façon élastique vers la fente 19.

## Revendications

1. Dispositif de mise en nappe de fibres optiques à partir d'un module (27) de fibres optiques, le dispositif comportant un socle (1) supportant un organe de maintien de module (2), et un organe de positionnement et d'ordonnancement de fibres (4), voisin de l'organe de maintien de module et comportant une fente (19) débouchant sur un côté, caractérisé en ce qu'il comporte un organe d'étalement de fibres (3), également voisin de l'organe de maintien du module et ayant une surface d'appui présentant des parties en saillie.

2. Dispositif de mise en nappe selon la revendication 1, caractérisé en ce que la surface d'appui de l'organe d'étalement (3) est décalée latéralement par rapport à une direction longitudinale du module.

3. Dispositif de mise en nappe selon la revendication 1 ou la revendication 2, caractérisé en ce que l'organe d'étalement (3) comporte un ressort (18) s'étendant dans un plan sensiblement perpendiculaire à une direction longitudinale du module.

4. Dispositif de mise en nappe selon la revendication 3, caractérisé en ce que le ressort (18) s'étend sensiblement selon un arc de cercle.

5. Dispositif de mise en nappe selon l'une quelconque des revendications 1 à 4, caractérisé en ce que la fente (19) de l'organe de positionnement et d'ordonnancement forme un angle d'environ 45° par rapport à un plan horizontal.

6. Dispositif de mise en nappe selon l'une quelconque des revendications 1 à 5, caractérisé en ce que l'organe de positionnement et d'ordonnancement comporte une lame de serrage (20) montée de façon élastique dans un bloc de manoeuvre (21).

7. Dispositif de mise en nappe selon la revendication 1, caractérisé en ce que l'organe de maintien de module comporte un bloc support (8) ayant une face supérieure dans laquelle s'étend une rainure (9) ayant une section adaptée à recevoir un module, et un clapet de fermeture (10) monté de façon articulée sur le support (8) en regard de la rainure (9).

8. Dispositif de mise en nappe selon la revendication 7, caractérisé en ce que l'organe de maintien du module comporte une plaque de guidage (12) fixée au clapet (10) et formant un angle avec celui-ci, cette plaque de guidage comportant une rainure (13) disposée pour venir dans le prolongement de la rainure (9) du bloc support (8) pour une position ouverte du clapet (10).

9. Dispositif de mise en nappe selon la revendication 6 ou la revendication 7, caractérisé en ce que le bloc support (8) comporte un aimant (11) disposé pour retenir le clapet (10) dans une position fermée.

10. Dispositif de mise en nappe selon l'une quelconque des revendications 6 à 8, caractérisé en ce qu'il comporte un pion de guidage (14) voisin de la rainure (9) du bloc support (8) et s'étendant en saillie par rapport à la surface supérieure du bloc support (8).

11. Dispositif de mise en nappe selon l'une quelconque des revendications 1 à 9, caractérisé en ce qu'il comporte un organe support (5) pour un montage amovible d'une pince à fibres (24) dans le prolongement de l'organe de positionnement et d'ordonnancement (4).
